# EUROPEAN PATENT SPECIFICATION

(11) **EP 3 510 850 B1**
(45) Date of publication and mention of the grant of the patent: **03.03.2021**
(21) Application number: 19151557.6
(22) Date of filing: 14.01.2019
(51) Int. Cl.: A01B 33/08

(54) **AGRICULTURAL EQUIPMENT AND AGRICULTURAL ACCESSORY INCLUDING SAID EQUIPMENT**
LANDWIRTSCHAFTLICHE AUSRÜSTUNG UND LANDWIRTSCHAFTLICHES ZUBEHÖR MIT DIESER AUSRÜSTUNG
EQUIPEMENT AGRICOLE ET ACCESSOIRE INCLUANT CE ACCESSOIRE

(30) Priority: 16.01.2018 IT 201800001091
(43) Date of publication of application: 17.07.2019
(73) Proprietor: Torrico S.r.l., 36053 Gambellara (VI) (IT)
(72) Inventor: PEGORARO, Luciano, 36040 SAREGO (VI) (IT)
(74) Representative: Burchielli, Riccardo

(56) References cited:
- WO-A1-2014/073958
- WO-A1-2017/166434
- WO-A2-01/58243
- DE-A1-102006 020 663
- FR-A1- 2 866 909
- FR-A5- 2 092 953

## Description

This invention relates to an agricultural equipment designed to be coupled to a tractor for working the terrain and an agricultural accessory including it.

More specifically, the agricultural equipment according to the invention is dynamically balanced and of much more flexible use with respect to currently known traditional equipment.

In particular, numerous items of agricultural equipment are currently known which are provided with at least one operating member which comprises a rotor shaft equipped with a plurality of blades which protrude from it in such a way that, when the rotor shaft is located alongside the terrain and rotated about a relative axis, the blades interfere with the terrain so as to work it.

Various operations are obtained by using agricultural equipment equipped with blades with different shapes and extensions and which are actuated with different speeds and directions of rotation selected correspondingly.

For example, agricultural equipment is currently known which differ in terms of their specific configuration, designed for ploughing, improving the terrain or burying stones, etc.

The agricultural equipment of numerous manufacturers have a transmission unit which actuates the rotor shaft from a relative end.

This traditional solution has numerous drawbacks which can be associated with possible bending of the shaft and dimensions of the transmission system.

The problem at the basis of the invention is to provide an agricultural equipment, and an agricultural accessory which includes it, which is more versatile and efficient than traditional agricultural equipment.

An agricultural equipment is described, for example, in the patent document WO2014/073958. This document discloses an agricultural equipment comprising: a frame configured to be hung on a tractor; a power connector fixed to the frame and configured to be connected to a tractor power take-off; a rotor shaft fixed to the frame in a rotatable manner with respect to a rotation axis; a transmission unit fixed to the frame and connected to the power connector, for receiving and transmitting power to a median section of the rotor shaft for actuating the rotor shaft; whereby the transmission unit comprises a head assembly and a lower unit.

The main aim of this invention is to make an agricultural equipment and an agricultural accessory which comprises it which resolve this problem overcoming the drawbacks of the traditional agricultural equipment described above.

The aim of the invention is therefore to provide an agricultural equipment which can be easily adapted or converted for performing different functionalities.

Another aim of the invention is to make an agricultural equipment which is dynamically balanced and which more durable than traditional agricultural equipment under the same operating conditions.

A further aim of the invention is to provide an agricultural equipment which is structurally simple, easy to use and easy to make.

This aim, as well as these and other aims which will emerge more fully below, are attained by an agricultural equipment according to appended claim 1.

Detailed features of the agricultural equipment according to the invention are indicated in the dependent claims.

Further features and advantages of the invention will emerge more fully from the description of a preferred but not exclusive embodiment of an agricultural equipment, illustrated by way of non-limiting example in the accompanying drawings, in which:
- Figure 1 is a perspective view of an agricultural equipment, with some parts cut away in order to better illustrate others;
- Figure 2 illustrates a cross-section view of a detail relative to a transmission unit of the equipment of Figure 1;
- Figure 3 illustrates a perspective and partially exploded view of a detail relative to a head assembly of the agricultural equipment of the previous drawings;
- Figures 4a and 4b illustrate a perspective view of a detail of the transmission unit of the agricultural equipment of the previous drawings, respectively in two different assembly configurations;
- Figure 5 illustrates a perspective and partially exploded view of an agricultural accessory according to the invention;
- Figure 6 illustrates a simplified diagram of the agricultural equipment 10 in a relative condition of use.

With particular reference to the above-mentioned drawings, the numeral 10 denotes in its entirety an agricultural equipment which preferably comprises:
- a frame 11 configured to be hung on a tractor, not illustrated, in a traditional manner;
- a power connector 12 fixed to the frame 11 and designed to be connected to a power pick-up of the tractor, of known type and no illustrated;
- a rotor shaft 13 fixed to the frame 11 in a rotatable manner with respect to a rotation axis A;
- a transmission unit 14 fixed to the frame 11 and connected to the power connector 12, for receiving power, and to a median section of the rotor shaft 13 for actuating the latter.

The expression "median section" means a portion of the rotor shaft 13 which is intermediate between the two ends of the rotor shaft 13 and is preferably a portion of the rotor shaft 13 equidistant from the ends.

In this way the transmission unit 14 actuates the rotor shaft 13 from a central position of the latter which preferably extends symmetrically fro the two sides of the transmission unit 14, allowing a greater rigidity of the agricultural equipment 10 to be obtained with respect to the traditional equipment which actuates the rotor shaft from a relative end.

An agricultural equipment 10 according to the invention in fact allows a more effective and efficient working of the terrain to be obtained thanks to the relative dynamic balancing, whilst it is structurally more simple and durable than that of traditional agricultural equipment.

According to the invention, the agricultural equipment 10 has a peculiarity due the fact that it preferably has the transmission unit 14 which comprises a head assembly 15 which has:
- a casing 16;
- a first conical toothed wheel (17) fixed to the casing 16 in a rotatable fashion about a primary axis B and connected to the power connector 12, preferably by a gear unit 35;
- a conversion member 18 having a hub 19, a second conical toothed wheel 20 and a third toothed wheel 21, preferably with straight teeth, both keyed onto the hub 19 which is fixed to the casing 16 in a rotatable manner according to a secondary axis C preferably according to at least two alternative configurations, described in more detail below.

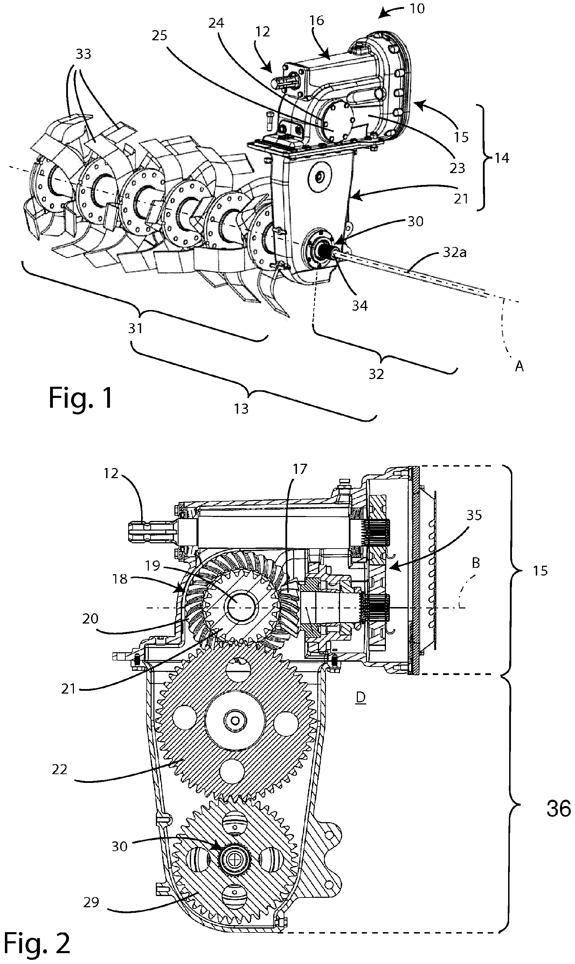

With reference to the example of Figure 2, in this embodiment the secondary axis will be advantageously perpendicular to the sheet and central to the hub 19.

In accordance with the invention, the transmission unit 14 advantageously also comprises a lower unit 36 which has a fourth toothed wheel 22, preferably with straight teeth which is connected to the second toothed wheel 20, in order to be actuated, and lies on a transmission plane D.

In this description it is considered that a toothed wheel lies on a plane when the plane intersects the teeth of the toothed wheel and the axis of rotation A of the toothed wheel is perpendicular to the plane.

In this respect, the transmission plane D, for example, in Figure 2 coincides with the plane of the sheet.

The lower unit 36 is advantageously fixable to the head unit 15 in such a way that the primary axis B and the third toothed wheel 21 lie on the transmission plane D, as shown, for example, in Figure 2. Advantageously, the casing 16 and the conversion member 18 are configured for being assembled in a first configuration or in a second configuration.

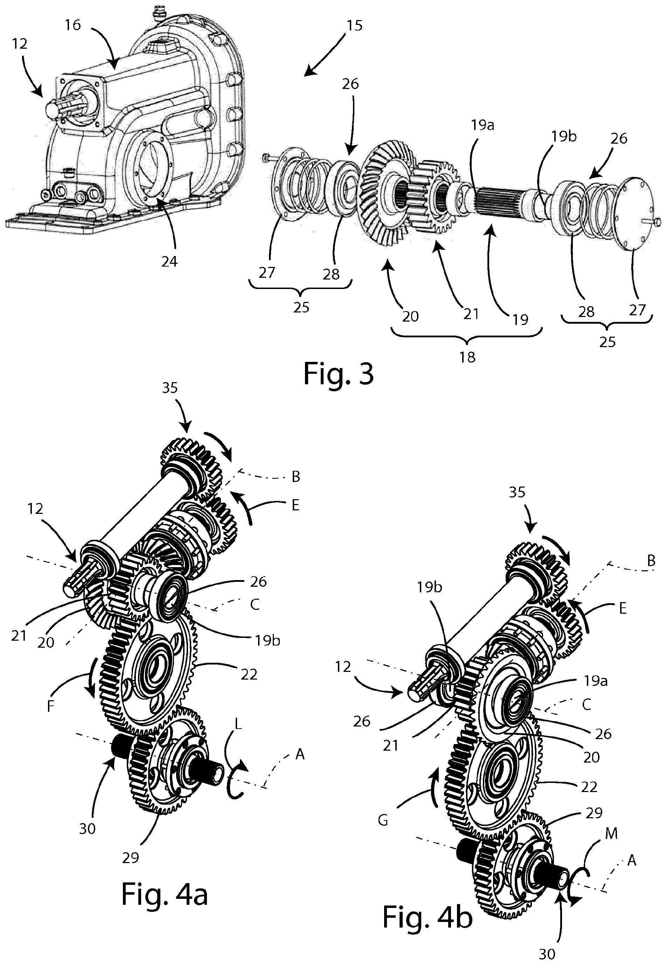

By way of a non-limiting example, the configurations are shown, respectively, in Figures 4a and 4b.

More specifically, the first and second configuration are such that following a rotation in a direction of actuation E of the first toothed wheel 17:
- in the first configuration, the conversion member 18 actuates the fourth toothed wheel 22 in a first direction of rotation F and consequently the rotor shaft 13 in a first operating direction L;
- in the second configuration, the conversion member 18 actuates the fourth toothed wheel 22 in a second direction of rotation G which is opposite the first direction of rotation F and consequently the rotor shaft 13 in a second operating direction M, opposite the first operating direction L. Advantageously, the casing 16 comprises:

- a main body 23 housing the first toothed wheel 17, configured for housing the conversion member 18 and provided with two opposite extraction openings 24, through which the conversion member 18 is removable from the casing 16;
- two covers 25 each designed to close one of the extraction openings 24 and provided with a support 26 designed to support an end 19a, 19b of the hub 19 so as to define for the latter the secondary axis C.

Preferably, each of the covers 25 comprises a plate 27 which can be fixed to the main body 23 and a bearing 28, which defines the support 26, which can be fixed to the plate 27 and at one end 19a, 19b of the hub 19.

In this way it will be easy to change the configuration of the conversion member 18 to reverse the nominal direction of rotation of the rotor shaft 13 of the agricultural equipment 10 so as to obtain a different functionality, for example for burying stones instead of ploughing.

The lower unit 36 advantageously comprises a fifth toothed wheel 29 and the fourth toothed wheel 22, which engage directly or by means of at least a further intermediate toothed wheel, not illustrated and in a traditional fashion.

The fifth toothed wheel 29 is advantageously keyed on a central element 30 of the rotor shaft 13.

The rotor shaft 13 preferably comprises a first branch 31, a second branch 32 and blades 33 which extend from the first branch 31 and from the second branch 32 for working the terrain.

Each of the branches 31, 32 has an end fixed to the end of the central element 30 for being actuated by the latter.

In Figure 1 the first branch 31 is shown entirely whilst for the second branch 32 only a core 32a of the end 34 is shown.

In Figure 1, it should be considered, even though not visible, that the first branch 31 is also provided with a core and an end similar to those visible for the second branch 32 as the two branches 31 and 32 are preferably mutually specular.

Advantageously, the first branch 31 has, along the axis of rotation A, an extension which is substantially equal to the extension of the second branch 32 along the axis of rotation A.

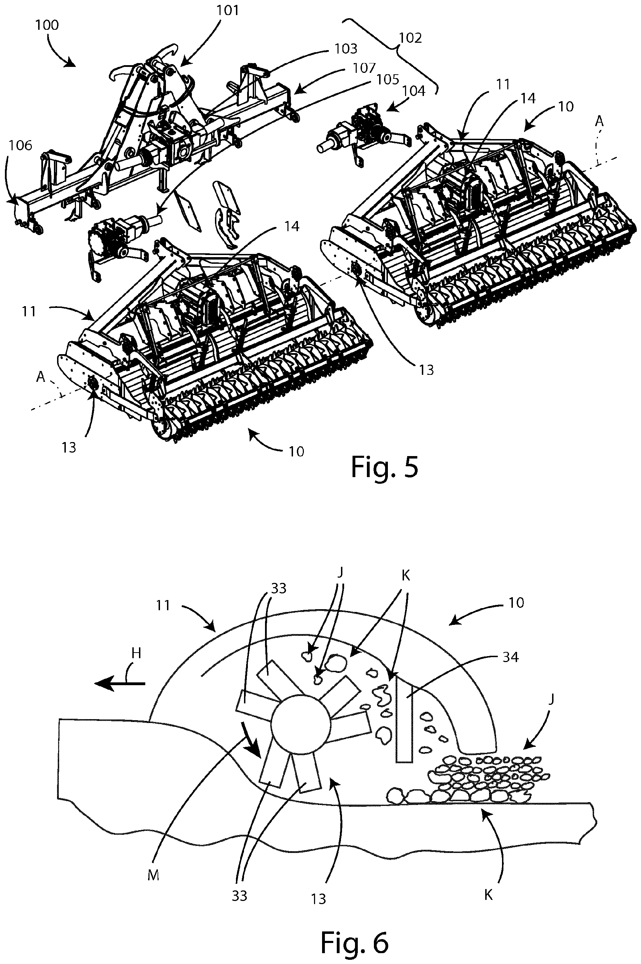

In an embodiment designed to carry out an operation for burying stones, the agricultural equipment 10 advantageously comprises a sieve element 34, shown by way of example in Figure 6, which is fixed to the frame 11 and faces the rotor shaft 13 to be struck by stones pushed by the rotor shaft 13 during its rotation for working the ground.

The sieve element 34 is advantageously configured for being passed through by small stones J, that is to say, having a particle size smaller than a reference value and for pushing towards the rotor shaft 13 large stones K, that is to say, having a particle size greater than the reference value.

The sieve element 34 is preferably positioned in the frame 11 downstream of the rotor shaft 13 with respect to ta moving direction H of the agricultural equipment 10.

Another object of the invention is an agricultural equipment 100 which has a particular peculiarity in that it comprises:
- a support unit 101 which can be fixed to a tractor;
- at least two items of agricultural equipment 10 connected to the supporting unit 101 so that they are alongside one another;
- a transmission unit 102 provided with a connection member 103 designed to be coupled to the tractor power take-off and provided with at least two transmission branches 104, 105 each configured to be connected to the power connector 12 of one of the items of agricultural equipment 10.

The support unit 101 advantageously comprises two connection elements 106, 107 each designed to be connected to one of the at least two items of agricultural equipment 10.

The connection elements 106, 107 are preferably placed in substantially mirror-like positions with respect to the connection member 103 for supporting the agricultural equipment 10 in mirror-like positions so as to obtain an optimum dynamic balancing of the agricultural equipment 100.

It can therefore be understood how an agricultural equipment 10 and an agricultural accessory 100 which comprises it achieves the specified aims allowing an extremely easy adaptation of the structure of the agricultural equipment 10 to different functional requirements simply by changing the configuration of the conversion member 18 from the first configuration to the second configuration and vice versa, thereby converting the functionality of the agricultural equipment 10 from that of a plough to that of burying stones which comprises, in particular, the inversion of the direction of rotation of the rotor shaft 13.

The invention as it is conceived is susceptible to numerous modifications and variants, all falling within the scope of protection of the appended claims.

Further, all the details can be replaced by other technically-equivalent elements.

In practice, the materials used, as well as the contingent forms and dimensions, can be varied according to the contingent requirements and the state of the art.

Where the constructional characteristics and the technical characteristics mentioned in the following claims are followed by signs or reference numbers, the signs or reference numbers have been used only with the aim of increasing the intelligibility of the claims themselves and, consequently, they do not constitute in any way a limitation to the interpretation of each element identified, purely by way of example, by the signs or reference numerals.

## Claims

1. Agricultural equipment (10) comprising:
- a frame (11) configured to be hung on a tractor;
- a power connector (12) fixed to said frame (11) and configured to be connected to a tractor power take-off;
- a rotor shaft (13) fixed to said frame (11) in a rotatable manner with respect to a rotation axis (A);
- a transmission unit (14) fixed to said frame (11) and connected to said power connector (12), for receiving and transmitting power to a median section of said rotor shaft (13) for actuating said rotor shaft (13);
said transmission unit (14) comprises a head assembly (15) which has:
- a casing (16);
- a first conical toothed wheel (17) fixed to said casing (16) in a rotatable manner according to a primary axis (B) perpendicular to said rotation axis (A) and connected to said power connector (12);
- a conversion member (18) having a hub (19), a second conical toothed wheel (20) and a third toothed wheel (21), said second and third toothed wheels being keyed onto said hub (19) which is fixed to said casing (16) in a rotatable manner according to a secondary axis (C) parallel to said rotation axis (A);
said transmission unit (14) further comprising a lower unit (36) which has a fourth toothed wheel (22) connected to said second toothed wheel (20) and which lies on a transmission plane (D) where further lies said primary axis (B);
said lower unit (36) being fixable to said head assembly (15) such that said primary axis (B) and said third toothed wheel (21) lie on said transmission plane (D);
said casing (16) and said conversion member (18) being configured to be assembled in a first configuration and in a second configuration, according to which, following a rotation in an operating direction (E) of said first toothed wheel (17)
- in said first configuration said conversion member (18) drives said fourth toothed wheel (22) into a first rotating direction (F);
- in said second configuration said conversion member (18) drives said fourth toothed wheel (22) into a second rotating direction (G) which is opposite to said first rotating direction (F).

2. Agricultural equipment (10) according to claim 1 **characterized in that** said casing (16) comprises:
- a main body (23) housing said first toothed wheel (17), configured to house said conversion member (18) and provided with two opposed extraction openings (24), through which said conversion member (18) is removable from said casing (16);
- two covers (25) each configured to close one of said extraction openings (24) and provided with a support (26) adapted to support an end (19a, 19b) of said hub (19) so as to define said secondary axis (C) of said hub (19).

3. Equipment according to claim 2 **characterized in that** each of said covers (25) comprises a plate (27) which is fixed to said main body (23) and a bearing (28) defining said support (26) and fixable to said plate (27) and at one end (19a, 19b) of said hub (19).

4. Agricultural equipment (10) according to one of the preceding claims, **characterized in that** said lower assembly (36) comprises a fifth toothed wheel (29) and said fourth toothed wheel (22) which mesh either directly or by at least one further intermediate toothed wheel; said fifth toothed wheel (29) being keyed on a central element (30) of said rotor shaft (13); said rotor shaft (13) comprising a first branch (31), a second branch (32) and blades (33) extending from said first and second branches (32) for working the soil; each of said branches (31, 32) having a terminal fixed at one end of said central element (30) to be operated by the central element (30).

5. Agricultural equipment (10) according to claim 4 **characterized in that** said first branch (31) has, along said rotation axis (A), an extension which is substantially equal to the extension of said second branch (32) along said rotation axis (A).

6. Agricultural equipment (10) according to one of the preceding claims, **characterized in that** it comprises a sieve element (34) fixed to a frame (11) and facing said rotor shaft (13) so that said sieve element (34) is hit by stones pushed by said rotor shaft (13); said sieve element (34) being configured to be crossed by stones having a particle size smaller than a reference value and for pushing towards said rotor shaft (13) stones having a particle size greater than said reference value; said sieve element (34) being positioned in said frame (11) downstream of said rotor shaft (13) with respect to a moving direction (H) of said agricultural equipment (10).

7. Agricultural accessory (100) comprising:
- a support group (101) configured to be fixed to a tractor;
**characterized in that** it comprises:
- at least two agricultural equipment (10) according to one of the claims 1 to 6, the at least two agricultural equipment (10) connected to said support group (101) so as to be side by side;
- a further transmission unit (102) provided with a connection member (103) configured to be coupled to the tractor power take-off and provided with at least two transmission branches (31, 32) each configured to be connected to the power connector (12) of one of said agricultural equipment (10).

8. Agricultural accessory (100) according to claim 7 **characterized in that** said support group (101) comprises two connection elements (106, 107) each configured to be connected to one of said at least two agricultural equipment (10); said connection elements (106, 107) being placed in substantially mirror-like positions with respect to said connection member (103) so as to support said agricultural equipment (10) in mirror positions.

## Patentansprüche

1. Landwirtschaftliches Gerät (10), umfassend:
- einen Rahmen (11), der gestaltet ist, an einen Traktor angehängt zu werden;
- einen Stromanschluss (12), der an dem Rahmen (11) befestigt und gestaltet ist, mit einer Traktorstromentnahme verbunden zu werden;
- eine Rotorwelle (13), die an dem Rahmen (11) drehbar in Bezug auf eine Drehachse (A) befestigt ist;
- eine Getriebeeinheit (14), die an dem Rahmen (11) befestigt und mit dem Stromanschluss (12) verbunden ist, zum Empfangen und Übertragen von Strom zu einem mittelern Abschnitt der Rotorwelle (13) zum Betätigen der Rotorwelle (13);
wobei die Getriebeeinheit (14) eine Kopfgruppe (15) umfasst, die aufweist:
- ein Gehäuse (16);
- ein erstes konisches Zahnrad (17), das an dem Gehäuse (16) drehbar gemäß einer primären Achse (B) senkrecht zur der Drehachse (A) befestigt und mit dem Stromanschluss (12) verbunden ist;
- ein Umwandlungselement (18) mit einer Nabe (19), einem zweiten konischen Zahnrad (20) und einem dritten Zahnrad (21), wobei das zweite und dritte Zahnrad auf die Nabe (19) gekeilt sind, die an dem Gehäuse (16) drehbar gemäß einer sekundären Achse (C) parallel zu der Drehachse (A) befestigt ist;
wobei die Getriebeeinheit (14) weiter eine untere Einheit (36) umfasst, die ein viertes Zahnrad (22) aufweist, das mit dem zweiten Zahnrad (20) verbunden ist und das auf einer Übertragungsebene (D) liegt, wo weiter die primäre Achse (B) liegt;
wobei die untere Einheit (36) an der Kopfgruppe (15) befestigbar ist, sodass die primäre Achse (B) und das dritte Zahnrad (21) auf der Übertragungsebene (D) liegen;
wobei das Gehäuse (16) und das Umwandlungselement (18) gestaltet sind, in einer ersten Ausgestaltung und in einer zweiten Ausgestaltung zusammengebaut zu werden, demgemäß einer Drehung in einer Betriebsrichtung (E) des ersten Zahnrads (17) folgend,
- in der ersten Ausgestaltung das Umwandlungselement (18) das vierte Zahnrad (22) in einer ersten Drehrichtung (F) antreibt;
- in der zweiten Ausgestaltung das Umwandlungselement (18) das vierte Zahnrad (22) in einer zweiten Drehrichtung (G), die der ersten Drehrichtung (F) entgegengesetzt ist, antreibt.

2. Landwirtschaftliches Gerät (10) nach Anspruch 1, **dadurch gekennzeichnet, dass** das Gehäuse (16) umfasst:
- einen Hauptkörper (23) der das erste Zahnrad (17) aufnimmt, gestaltet, das Umwandlungselement (18) aufzunehmen und mit zwei gegenüberliegenden Extraktionsöffnungen (24) bereitgestellt, durch die das Umwandlungselement (18) aus dem Gehäuse (16) entfernbar ist;
- zwei Abdeckungen (25), die jeweils gestaltet sind, eine der Extraktionsöffnungen (24) zu verschließen, und mit einem Trägerelement (26) bereitgestellt sind, um ein Ende (19a, 19b) der Nabe (19) zu tragen, um so die sekundäre Achse (C) der Nabe (19) zu definieren.

3. Gerät nach Anspruch 2, **dadurch gekennzeichnet, dass** jede der Abdeckungen (25) eine Platte (27) umfasst, die an dem Hauptkörper (23) befestigt ist, und ein Lager (28), das das Trägerelement (26) definiert und an der Platte (27) an einem Ende (19a, 19b) der Nabe (19) befestigbar ist.

4. Landwirtschaftliches Gerät (10) nach einem der vorstehenden Ansprüche, **dadurch gekennzeichnet, dass** die untere Gruppe (36) ein fünftes Zahnrad (29) und das vierte Zahnrad (22) umfasst, die entweder direkt oder über mindestes ein weiteres dazwischenliegendes Zahnrad in Eingriff sind, wobei das fünfte Zahnrad (29) auf einem zentralen Element (30) der Rotorwelle (13) verkeilt ist; die Rotorwelle (13) einen ersten Zweig (31), einen zweiten Zweig (32) und Klingen (33) umfasst, die sich von dem ersten und zweiten Zweig (32) erstrecken, um den Boden zu bearbeiten; jeder der Zweige (31, 32) eine Endstelle aufweist, die an einem Ende des zentralen Elements (30) befestigt ist, um von dem zentralen Element (30) betrieben zu werden.

5. Landwirtschaftliches Gerät (10) nach Anspruch 4, **dadurch gekennzeichnet, dass** der erste Zweig (31) entlang der Drehachse (A) eine Ausdehnung aufweist, die im Wesentlichen gleich der Ausdehnung des zweiten Zweigs (32) entlang der Drehachse (A) ist.

6. Landwirtschaftliches Gerät (10) nach einem der vorstehenden Ansprüche, **dadurch gekennzeichnet, dass** es ein Siebelement (34) umfasst, das an einem Rahmen (11) befestigt ist und der Rotorwelle (13) zugewandt ist, sodass das Siebelement (34) von Steinen getroffen wird, die durch die Rotorwelle (13) geschoben werden; wobei das Siebelement (34) gestaltet ist, von Steinen, die eine kleinere Teilchengröße als ein Referenzwert haben, durchquert zu werden, und Steine, die eine größere Teilchengröße als der Referenzwert haben, zu der Rotorwelle (13) zu schieben; wobei das Siebelement (34) in dem Rahmen (11) nach der Rotorwelle (13) in Bezug auf eine Bewegungsrichtung (H) des landwirtschaftlichen Geräts (10) positioniert ist.

7. Landwirtschaftliches Zubehör (100) umfassend:
- eine Trägerelement gruppe (101), die gestaltet ist, an einem Traktor befestigt zu sein;
**dadurch gekennzeichnet, dass** es umfasst:
- mindestens zwei landwirtschaftliche Geräte (10) nach einem der Ansprüche 1 bis 6, wobei die mindestens zwei landwirtschaftlichen Geräte (10) mit der Trägerelement gruppe (101) so verbunden sind, dass sie Seite an Seite liegen;
- eine weitere Getriebeeinheit (102), die mit einem Verbindungselement (103) bereitgestellt ist, das gestaltet ist, mit der Traktorstromentnahme gekoppelt zu sein, und mit mindestens zwei Übertragungszweigen (31, 32) bereitgestellt ist, die jeweils gestaltet sind, mit dem Stromanschluss (12) eines der landwirtschaftlichen Geräte (10) verbunden zu sein.

8. Landwirtschaftliches Zubehör (100) nach Anspruch 7, **dadurch gekennzeichnet, dass** die Trägerelement gruppe (101) zwei Verbindungselemente (106, 107) umfasst, die jeweils gestaltet sind, mit einem der mindestens zwei landwirtschaftlichen Geräte (10) verbunden zu sein; wobei die Verbindungselemente (106, 107) in im Wesentlichen spiegelartigen Positionen in Bezug auf das Verbindungselement (103) platziert sind, um so die landwirtschaftlichen Geräte (10) in Spiegelpositionen zu tragen.

## Revendications

1. Équipement agricole (10) comprenant :
- un cadre (11) configuré pour être accroché à un tracteur ;
- un connecteur électrique (12) fixé sur ledit cadre (11) et configuré pour être raccordé à une prise de force du tracteur ;
- un arbre de rotor (13) fixé audit cadre (11) de manière à pouvoir pivoter par rapport à un axe de rotation (A) ;
- une unité de transmission (14) fixée audit cadre (11) et raccordée audit connecteur électrique (12), pour recevoir et transmettre une puissance à une partie médiane dudit arbre de rotor (13) pour actionner ledit arbre de rotor (13) ; ladite unité de transmission (14) comprend un ensemble formant tête (15) qui possède :
- un carter (16) ;
- une première roue dentée conique (17) fixée audit carter (16) de manière à pouvoir pivoter selon un axe principal (B) perpendiculaire audit axe de rotation (A) et raccordée audit connecteur électrique (12) ;
- un élément de conversion (18) muni d'un moyeu (19), d'une deuxième roue dentée conique (20) et d'une troisième roue dentée (21), lesdites deuxième et troisième roues dentées étant clavetées sur ledit moyeu (19) qui est fixé audit carter (16) de manière à pouvoir pivoter selon un axe secondaire (C) parallèle audit axe de rotation (A) ;
ladite unité de transmission (14) comprenant en outre une unité inférieure (36) qui possède une quatrième roue dentée (22) raccordée à ladite deuxième roue dentée (20) et qui se trouve sur un plan de transmission (D) où se trouve également ledit axe principal (B) ;
ladite unité inférieure (36) pouvant être fixée audit ensemble formant tête (15) de sorte que ledit axe principal (B) et ladite troisième roue dentée (21) se trouvent sur ledit plan de transmission (D) ;
ledit carter (16) et ledit élément de conversion (18) étant configurés pour être montés selon une première configuration et selon une seconde configuration, selon lesquelles, à la suite d'une rotation dans une direction de fonctionnement (E) de ladite première roue dentée (17)
- selon ladite première configuration ledit élément de conversion (18) entraîne ladite quatrième roue dentée (22) dans une première direction de rotation (F) ;
- selon ladite seconde configuration ledit élément de conversion (18) entraîne ladite quatrième roue dentée (22) dans une seconde direction de rotation (G) qui est opposée à ladite première direction de rotation (F).

2. Équipement agricole (10) selon la revendication 1 **caractérisé en ce que** ledit carter (16) comprend :
- un corps principal (23) logeant ladite première roue dentée (17), configuré pour loger ledit élément de conversion (18) et doté de deux ouvertures d'extraction opposées (24), par lesquelles ledit élément de conversion (18) peut être ôté dudit carter (16) ;
- deux couvercles (25) configurés chacun pour fermer l'une desdites ouvertures d'extraction (24) et dotés d'un support (26) adapté pour soutenir une extrémité (19a, 19b) dudit moyeu (19) de manière à définir ledit axe secondaire (C) dudit moyeu (19).

3. Équipement selon la revendication 2 **caractérisé en ce que** chacun desdits couvercles (25) comprend une plaque (27) qui est fixée audit corps principal (23) et un roulement (28) définissant ledit support (26) et pouvant être fixé à ladite plaque (27) et à une extrémité (19a, 19b) dudit moyeu (19).

4. Équipement agricole (10) selon l'une des revendications précédentes, **caractérisé en ce que** ledit ensemble inférieur (36) comprend une cinquième roue dentée (29) et ladite quatrième roue dentée (22) qui s'engrène soit directement, soit par au moins une autre roue dentée intermédiaire ; ladite cinquième roue dentée (29) étant clavetée sur un élément central (30) dudit arbre de rotor (13) ; ledit arbre de rotor (13) comprenant une première branche (31), une seconde branche (32) et des pales (33) s'étendant desdites première et seconde branches (32) pour le travail du sol ; chacune desdites branches (31, 32) possédant une borne fixée à une extrémité dudit élément central (30) pour être actionnée par l'élément central (30).

5. Équipement agricole (10) selon la revendication 4 **caractérisé en ce que** ladite première branche (31) possède, le long dudit axe de rotation (A), une extension qui est sensiblement égale à l'extension de ladite seconde branche (32) le long dudit axe de rotation (A).

6. Équipement agricole (10) selon l'une des revendications précédentes, **caractérisé en ce qu'**il comprend un élément de tamisage (34) fixé à un cadre (11) et faisant face audit arbre de rotor (13) de sorte que ledit élément de tamisage (34) est frappé par des pierres poussées par ledit arbre de rotor (13) ; ledit élément de tamisage (34) étant configuré pour être traversé par des pierres dont la taille de particules est plus petite qu'une valeur de référence et pour pousser vers ledit arbre de rotor (13) des pierres dont la taille de particules est plus grande que ladite valeur de référence ; ledit élément de tamisage (34) étant positionné dans ledit cadre (11) en aval dudit arbre de rotor (13) par rapport à une direction de déplacement (H) dudit équipement agricole (10).

7. Accessoire agricole (100) comprenant :
- un groupe de supports (101) configuré pour être fixé à un tracteur ;
**caractérisé en ce qu'**il comprend :
- au moins deux équipements agricoles (10) selon l'une des revendications 1 à 6, les au moins deux équipements agricoles (10) étant raccordés audit groupe de supports (101) de manière à être côte à côte ;
- une autre unité de transmission (102) dotée d'un élément de raccordement (103) configuré pour être couplé à la prise de force du tracteur et doté d'au moins deux branches de transmission (31, 32) configurées chacune pour être raccordées au connecteur électrique (12) de l'un desdits équipements agricoles (10).

8. Accessoire agricole (100) selon la revendication 7 **caractérisé en ce que** ledit groupe de supports (101) comprend deux éléments de raccordement (106, 107) configurés chacun pour être raccordés à l'un desdits au moins deux équipements agricoles (10) ; lesdits éléments de raccordement (106, 107) étant placés dans des positions sensiblement miroirs par rapport audit élément de raccordement (103) de manière à soutenir ledit équipement agricole (10) dans des positions miroirs.
